Europäisches Patentamt

European Patent Office

Office européen des brevets

(19)

(11) Veröffentlichungsnummer : **0 205 927**
**B1**

(12) **EUROPÄISCHE PATENTSCHRIFT**

(45) Veröffentlichungstag der Patentschrift :
23.11.89

(51) Int. Cl.⁴ : **F 16 D 65/56, B 61 H 15/00**

(21) Anmeldenummer : 86106893.0

(22) Anmeldetag : 21.05.86

(54) **Selbsttätige Nachstellvorrichtung für das Bremsgestänge, insbesondere von Schienenfahrzeugen.**

(30) Priorität : 13.06.85 DE 3521252

(43) Veröffentlichungstag der Anmeldung :
30.12.86 Patentblatt 86/52

(45) Bekanntmachung des Hinweises auf die Patenterteilung : 23.11.89 Patentblatt 89/47

(84) Benannte Vertragsstaaten :
**CH DE FR GB IT LI SE**

(56) Entgegenhaltungen :
**DE-A- 1 750 914**
**DE-A- 2 526 213**
**DE-A- 2 724 129**
**DE-A- 2 805 116**
**DE-A- 3 106 178**
**DE-B- 1 177 879**
**DE-B- 1 530 240**
**DE-B- 2 717 716**
**DE-B- 2 736 531**
**DE-C- 2 337 420**
**DE-C- 2 554 816**
**GB-A- 1 190 841**

(73) Patentinhaber : **KNORR-BREMSE AG**
**Moosacher Strasse 80 Postfach 401060**
**D-8000 München 40 (DE)**

(72) Erfinder : **Bartlechner, Manfred**
**Am Katzenstein 1**
**D-8031 Wessling (DE)**
Erfinder : **Kerscher, Albert**
**Frühlingstrasse 39**
**D-8057 Eching (DE)**

## Beschreibung

Die Erfindung betrifft eine selbsttätige Nachstellvorrichtung gemäß dem Oberbegriff des Anspruches 1.

Hierbei kann es sich um eine als Bremsgestängesteller ausgebildete Nachstellvorrichtung oder um einen Nachsteller in einem Bremszylinder handeln.

Bekannte Nachstellvorrichtungen der eingangs genannten Art sind mit dem Nachteil behaftet, daß beim Übertragen von Bremskräften über die Verschraubung zwischen den beiden Gestängeteilen Drehmomente entstehen, die an den beiden äußeren Enden der Nachstellvorrichtung bzw. am Kolbenstangenkopf und am Bremszylindergehäuse abgefangen werden müssen. Derartige Vorrichtungen zum Abfangen der Drehmomente sind nicht nur verschleißanfällig, sondern vernichten auch einen Teil der zu übertragenden Bremskraft, wodurch der Wirkungsgrad der Bremskraftübertragung negativ beeinflußt wird. Insbesondere bei mit Nachstellern ausgerüsteten Bremszylindern wird das Drehmoment zwischen axial verschieblichen Teilen abgefangen. Hierzu ist es bekannt, in einer Nut des einen rohrförmig ausgebildeten Gestängeteiles einen Gleitstein axial verschieblich eingreifen zu lassen, der am Zylindergehäuse einstellbar festgehalten ist. Eine solche Nut-Gleitsteinführung ist nicht nur verschleißanfällig und erfordert daher aufwendige, möglichst verschleißfeste Materialien, sondern die bei axialen Verschiebungen zwischen dem Zylindergehäuse und dem rohrförmigen Gestängeteil auftretenden Reibungskräfte müssen überwunden werden, wodurch der Wirkungsgrad der Bremskraftübertragung beachtlich herabgesetzt werden kann.

Da die Bremskräfte über die aus einer Stellmutter und einer Gewindespindel bestehenden Verschraubung zwischen den beiden Gestängeteilen einer Nachstellvorrichtung übertragen werden müssen, ist die auf Knickung beanspruchte Spindel bei der Übertragung von Bremskräften zusätzlich torsionsbeansprucht, wodurch der konstruktive Aufwand für die Spindel erhöht ist.

Aus der DE-A 25 26 213 ist eine Lösespiel-Nachstellvorrichtung für einen wahlweise druckmittelbetätigbaren oder mechanisch betätigbaren Bremszylinder bekannt. Es ist eine entgegen der Bremskraftrichtung gegen das Gehäuse abgestützte, bei mechanischer Betätigung mechanisch in Bremskraftrichtung vorschiebbare Gewindespindel vorgesehen, die über ein Gewinde mit einer Mutter verschraubt ist. Das Gewinde ist sägezahnartig mit einerseits flachen und andererseits steilen Flanken der Gewindegänge ausgebildet; bei mechanischer Betätigung gelangen die flachen Gewindegänge zum Eingriff, das Gewinde ist hierbei selbsthemmend und die Mutter wird ohne Bewirken von Drehmomenten beim Vorschieben der Gewindespindel mitgenommen. Die Mutter steht in Bremskraftrichtung unter einer Federbelastung und ist in dieser Richtung über eine Konuskupplung mit einem die Mutter und zum Teil die Gewindespindel umschließenden, topfartigen Kolben kuppelbar, der Kolben ist von einem Betriebsbremsdruckmittel beaufschlagbar und ist mit den Bremsorganen gekoppelt. Bei Betriebsbremsungen wird somit der Kolben vorgedrückt und die Mutter sucht sich unter ihrer Federbelastung ihm nachzuschrauben; hierbei gelangen die steilen Flanken des Gewindes zum Eingriff und das Gewinde ist nicht selbsthemmend. Insgesamt ergibt sich somit eine nur während Betriebsbremsungen wirksame, von der Bremskraft nicht durchsetzte und als einfache Rückhubbegrenzung für den Kolben dienende Nachstellvorrichtung, deren Verschraubung während Bremsungen keine nach außen wirksame Drehmomente erzeugt. Bei mechanischer Betätigung ist nur eine manuelle Nachstellung durch Verdrehen der Gewindespindel möglich.

Aufgabe der Erfindung ist es daher, eine Nachstellvorrichtung der eingangs genannten Art anzugeben, bei der beim Übertragen von Bremskräften an den äußeren Enden der Gestängeteile keine Drehmomente abgefangen werden müssen, so daß sich konstruktiv wesentlich einfachere und kostenmäßig billigere Lösungen anbieten, bei denen zugleich der Wirkungsgrad der Bremskraftübertragung erhöht ist. Damit sollen vorallem die konstruktiven Ausbildungen der Kupplungsstellen zwischen dem einen Gestängeteil und den zu den Bremsorganen führenden Bremsgestängeteilen einerseits und zwischen dem anderen Gestängeteil und dem Bremskraftmotor, z. B. einem Bremszylinder, andererseits einfacher und weniger verschleißanfällig und damit auch sicherer ausgeführt werden können, so daß mit verbilligtem konstruktiven Aufwand höhere Lebensdauern erreichbar sind. Andererseits soll bei mit Nachstellern versehenen Bremszylindern auch eine aufwendige Gleitführung zwischen den drehmomentbeaufschlagten Teilen weitgehend vermieden und damit auch der Wirkungsgrad der Bremskraftübertragung ohne wesentlichen zusätzlichen Aufwand beachtlich erhöht werden.

Die vorstehende Aufgabe wird mit den kennzeichnenden Merkmalen des Anspruches 1 gelöst. Vorteilhafte Ausführungen nach der Erfindung ergeben sich aus den Merkmalen der Unteransprüche.

Die Erfindung weist damit einen Weg zur Lösung der gestellten Aufgabe, zwischen Gewindespindel und Stellmutter der Gestängeverschraubung eine schaltbare kraft- oder eine formschlüssige Sperre anzuordnen. Durch die Erfindung ist damit auch ein Gewindespindel-Stellmuttersystem gefunden, das einerseits beim Einleiten von Stellkräften nicht selbsthemmend ist, andererseits beim Übertragen der Betätigungskraft selbsthemmend wird und kein Drehmoment nach außen abgibt.

Ausführungsbeispiele nach der Erfindung sind nachstehend anhand einer schematischen Zeichnung dargestellt.

Fig. 1 u. 2 zeigen zwei Ausführungsbeispiele einer erfindungsgemäßen kraftschlüssigen Drehsperre jeweils zwischen der Gewindespindel und der Stellmutter und

Fig. 3 u. 4 zwei weitere Ausführungsbeispiele einer formschlüssigen Drehsperre jeweils zwischen der Gewindespindel und der Stellmutter.

In der Zeichnung sind in den verschiedenen Ausführungsbeispielen jeweils lediglich die erfindungsgemäße Drehsperre innerhalb eines nicht selbsthemmenden Gewindespindel-Stellmuttersystems einer selbsttätigen Nachstellvorrichtung dargestellt, die Teil eines Bremsgestängestellers sein kann, die aber auch in einem Bremszylinder angeordnet sein kann.

Alle übrigen Teile einer Nachstellvorrichtung können herkömmlicher Art sein, wie sie z. B. durch die deutschen Patentanmeldungen Nr. 23 37 420, 25 54 816, 27 17 716, 27 36 531, 28 05 116 und 31 06 178 bekannt geworden sind. Aufbau und Funktionsweise solcher Nachstellvorrichtungen brauchen daher zur Erläuterung der Erfindung nicht näher beschrieben zu werden und können z. B. dem vorstehenden Stand der Technik entnommen werden, der jeweils eine Gewindespindel aufweist, die über ein nicht selbsthemmendes Gewinde mit einer Stellmutter verschraubt ist. Dieses Gewindespindel-Stellmuttersystem dient zur relativen Verstellung zweier teleskopartiger Gestängeteile, die an ihren äußeren Enden undrehbar gehalten sind und von denen jeweils das eine Gestängeteil rohrförmig ausgebildet ist, innerhalb dem das Gewindespindel-Stellmuttersystem angeordnet ist. Dabei führt eines der beiden Gestängeteile zu den Bremsorgangen, während das andere an den Bremskraftmotor angekoppelt ist.

In den Ausführungsbeispielen ist das Gewindespindel-Stellmuttersystem jeweils mit 1 bezeichnet, das innerhalb des rohrförmigen Gestängeteiles angeordnet ist, das jeweils mit 2 bezeichnet ist. In dem Gewindespindel-Stellmuttersystem ist die Stellmutter jeweils mit 3 und die Gewindespindel jeweils mit 4 bezeichnet. Das rohrförmige Gestängeteil 2 kann z. B. ein Kolbenrohr sein, das an einem Bremszylinderkolben fest angeordnet ist, während das vordere Ende der Gewindespindel 4 mit einem Bremsorgan in Verbindung steht.

Bei den bekannten Nachstellvorrichtungen, z. B. in einem Bremszylinder, wird beim Einleiten der Bremsbetätigungskraft über die Stellmutter 3 auf die Gewindespindel 4 ein Drehmoment ausgelöst, das einerseits z. B. am Kolbenstangenkopf und andererseits z. B. am Bremszylindergehäuse abgestützt werden muß. Beim Stand der Technik war daher innerhalb des Zylinders ein besonderer konstruktiver Aufwand erforderlich, um das Drehmoment abzustützten.

In den nachstehenden Ausführungsbeispielen werden Gewindespindel-Stellmuttersysteme aufgezeigt, die erfindungsgemäß einerseits beim Einleiten von Stellkräften nicht selbsthemmend sind, andererseits aber beim Übertragen der Betätigungskraft selbsthemmend werden und damit kein Drehmoment mehr nach außen abgeben.

Hierzu ist in den erfindungsgemäßen Ausführungsbeispielen jeweils zwischen der Gewindespindel 4 und der Stellmutter 3 eine schaltbare, kraft- oder formschlüssige Drehsperre angeordnet.

Es ist klar, daß die Erfindung nicht auf diese Ausführungsbeispiele beschränkt ist. So muß die Sperre nicht notwendigerweise zwischen der Gewindespindel und der Stellmutter angeordnet sein, sondern kann auch unmittelbar zwischen den beiden Gestängeteilen oder zwischen einem Gestängeteil und der Gewindespindel vorhanden sein. Dabei kann die Drehsperre aus wenigstens einer Nut-Federanordnung oder einer Längsverzahnung bestehen. Eine Nut-Federanordnung kann z. B. zwischen dem Kolbenrohr und der Gewindespindel vorhanden sein.

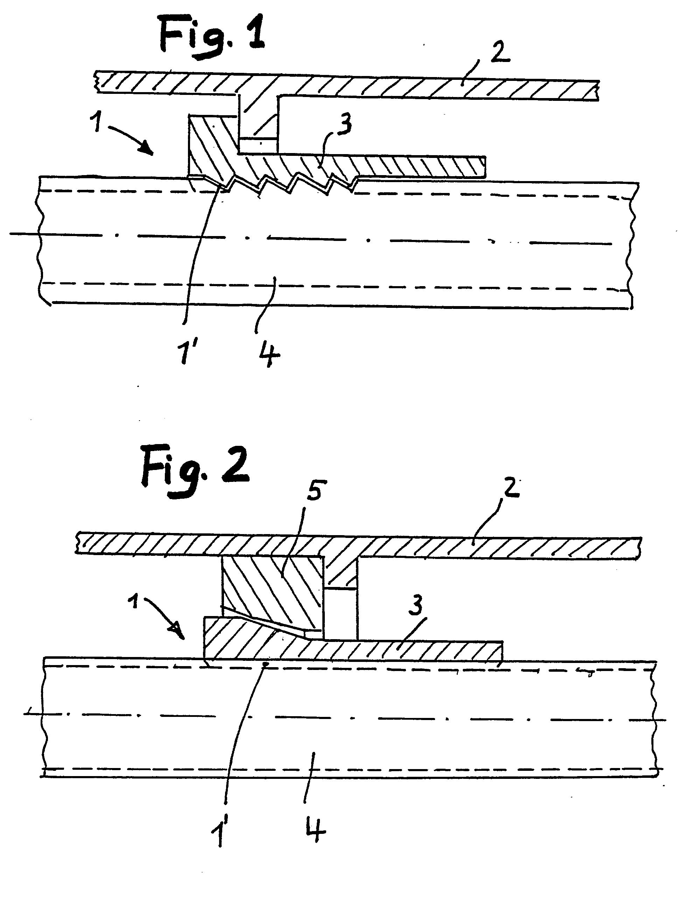

Fig. 1 zeigt eine kraftschlüssige Ausführung einer Drehsperre in einer erfindungsgemäßen Nachstellvorrichtung. Das Gewindespindel-Stellmuttersystem 1 weist ein Gewinde 1' auf, das als Sägegewinde mit einer steilen und einer flachen Gewindeflanke ausgeführt ist. Beim Einleiten der Kraft über das Kolbenrohr 2, die Stellmutter 3 und die Gewindespindel 4 liegen die flachen Gewindegänge an, das Gewinde 1' ist also selbsthemmend; es entsteht kein äußeres Drehmoment. Wird dagegen von der hier nicht dargestellten Stellfeder der Nachstellvorrichtung eine Kraft auf die Gewindespindel 1 ausgeübt, so liegen die steilen Gewindeflanken an, das Gewinde 1' ist nunmehr nicht selbstemmend und die gegen ein nicht dargestelltes Lager abgestützte Stellmutter 3 kann jetzt rotieren. Ein solches Lager ist z. B. in der deutschen Patentanmeldung 25 54 816 dargestellt, ebenso ist z. B. dort auch die Stellfeder gezeigt.

Fig. 2 zeigt ebenfalls eine kraftschlüssige Ausführung der Erfindung. Das Gewinde 1' des Gewindespindel-Stellmuttersystems 1 ist nicht selbsthemmend, die Stellmutter 3 ist jedoch nicht einteilig wie in Fig. 1, sondern besteht aus z. B. drei über den Umfang gleichmäßig verteilten Segmenten. Bei Einleitung der Kraft über das Kolbenrohr drückt ein konischer Ring 5 die Stellmuttersegmente 3 in die Gewindegänge, das Gewinde wird dadurch selbsthemmend. Bei Krafteinwirkung auf die Gewindespindel 4 werden die sich gegen ein nicht dargestelltes Lager abstützenden Segmente der Stellmutter frei und können sich drehen.

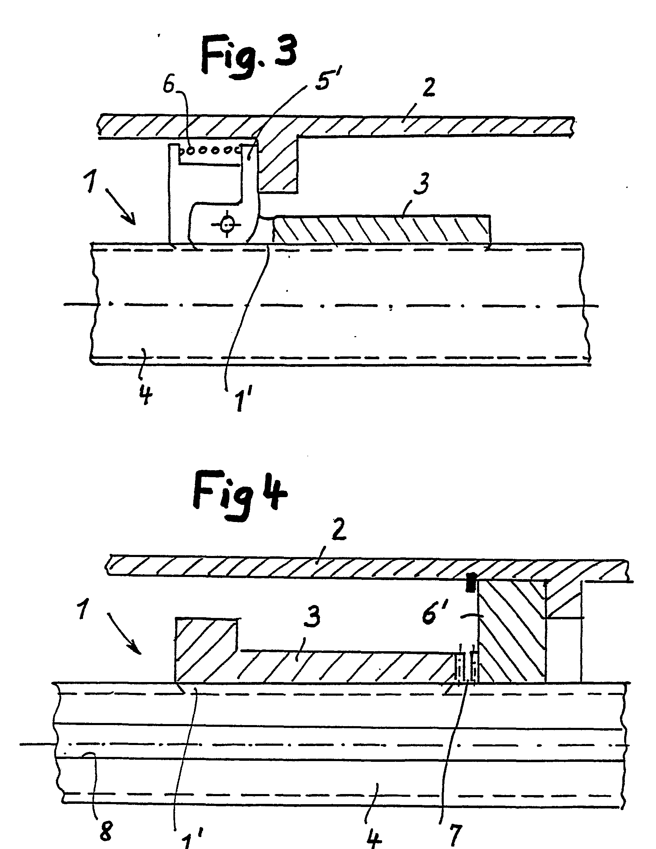

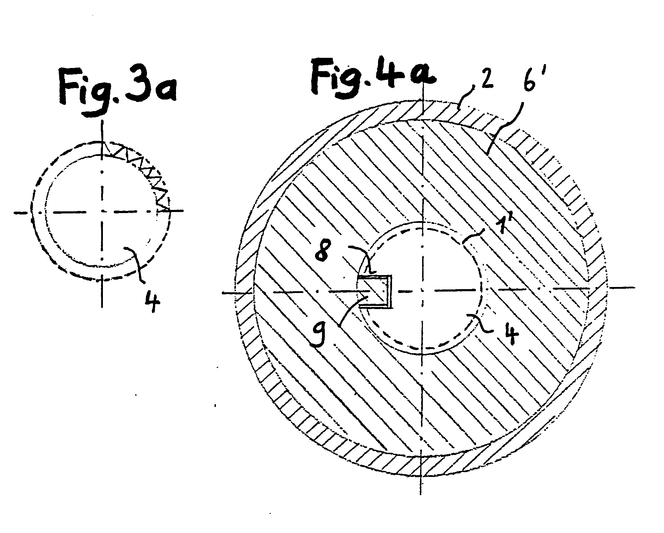

Fig. 3 zeigt eine formschlüssige Ausführung nach der Erfindung. Das Gewinde 1' des Gewindespindel-Stellmuttersystems 1 ist nicht selbsthemmend, die Gewindespindel 4 ist zusätzlich mit einer Längsverzahnung versehen. Die Stellmutter 3 besitzt eine oder mehrere gelenkig angebrachte Sperrklinken 5'. Bei Krafteinleitung über das Kolbenrohr 2 wird die Sperrklinke 5' entgegen der Kraft der Feder 6 zwischen der Sperrklinke 5' und einem Flansch an der Stellmutter 3 in die Längsverzahnung gedrückt. Damit kann sich die Stellmutter 3 unter der Krafteinwirkung des Kolbenrohres nicht mehr drehen.

Bei Krafteinleitung über die Gewindespindel 4 wird die Stellmutter 3 soweit axial verschoben, daß sich die Sperrklinke 5' unter der Wirkung der Feder 6 öffnet und die am nicht dargestellten Stellager abgestützte Stellmutter 3 rotieren kann.

Fig. 3a zeigt die Längsverzahnung quer im Schnitt.

Fig. 4 zeigt ebenfalls eine formschlüssige Ausführung nach der Erfindung. Das Gewinde 1' des Gewindespindel-Stellmuttersystems 1 ist nicht selbsthemmend. Am Kolbenrohr 2 ist ein Sperring 6' axial festgehalten. Der Sperring 6' ist mit der Gewindespindel 4 undrehbar, z. B. durch Nut 8 und Feder 9 (Fig. 4a), aber axial verschieblich verbunden. Der Sperring 6' und die Stellmutter 3 sind über eine Verzahnung 7 aufkuppelbar. Bei Krafteinleitung über das Kolbenrohr 2 setzt sich der Sperring 6' auf die Stellmutter 3 und hindert sie über die Verzahnung 7 am Drehen. Bei Krafteinleitung auf die Gewindespindel 4 wird die Stellmutter 3 aus der Verzahnung gezogen und kann abgestützt am Stellager unter der Kraft der Stellfeder in bekannter Weise rotieren.

Fig. 4a zeigt einen Schnitt durch die Nachstellvorrichtung im Bereich des Sperringes 6'.

Es sind viele weitere erfindungsgemäße kraft- oder formschlüssige Ausführungen für Drehsperren denkbar, die hier nicht alle aufgezeigt werden können, die aber im Rahmen der Erfindung für den Fachmann ohne weiteres naheliegen. Besonders vorteilhaft ist es, wenn das Drehmoment der Gewindeverbindung bereits im System Gewindespindel-Stellmutter abstützbar ist und nicht nach außen wirken kann.

## Patentansprüche

1. Selbsttätige Nachstellvorrichtung für das Bremsgestänge insbesondere von Schienenfahrzeugen, mit zwei mittels einer Verschraubung (1) teleskopartig relativ zueinander verstellbaren und an ihren äußeren Enden undrehbar gehaltenen Gestängeteilen, von denen ein Gestängeteil als eine Gewindespindel (4) und wenigstens ein Gestängeteil (2) rohrförmig ausgebildet ist, wobei ein Gestängeteil (4) mit den Bremsorganen und das andere Gestängeteil (2) mit einem eine Bremskraft aufgebenden Bremskraftmotor, beispielsweise einem Bremszylinder, gekuppelt ist und die Verschraubung (1) aus wenigstens einer auf der Gewindespindel (4) mittels eines nicht selbsthemmenden Gewindes (1') verschraubten Stellmutter (3) besteht, während eine axial verschiebliche Sperrvorrichtung vorgesehen ist, die in ihrer Sperrstellung zum Übertragen von Bremskräften auf die Bremsorgane die Stellmutter (3) und/oder die Gewindespindel (4) drehfest gegenüber den Gestängeteilen hält und die in ihrer entsperrten Stellung zum Nachstellen des Bremsgestänges eine relative Verschraubung der Stellmutter (3) und der Gewindespindel (4) zueinander freigibt, dadurch gekennzeichnet, daß zum Freihalten der äußeren Enden der beiden Gestängeteile (2, 4) von nach außen abgehenden Drehmomenten im Bereich zwischen diesen Enden der beiden Gestängeteile (2, 4) ein zwischen diesen Gestängeteilen (2, 4) wirksames, schaltbares kraft- oder formschlüssiges Drehsperr-Element (5, 5', 6') angeordnet ist.

2. Nachstellvorrichtung nach Anspruch 1, dadurch gekennzeichnet, daß die Drehsperre unmittelbar zwischen der Gewindespindel (4) und der Stellmutter (3) angeordnet ist (Figuren 1, 3).

3. Nachstellvorrichtung nach Anspruch 1, dadurch gekennzeichnet, daß die Drehsperre unmittelbar zwischen den beiden Gestängeteilen (2 und Gewindespindel 4) angeordnet ist (Fig. 2).

4. Nachstellvorrichtung nach Anspruch 1, dadurch gekennzeichnet, daß in dem rohrartigen Gestängeteil (2) ein Sperring (5) axial fest ist, der mit der Gewindespindel (4) undrehbar axial verschieblich gekuppelt ist und mittels einer axialen Verzahnung (7) bei Einleitung einer Bremskraft über das rohrartige Gestängeteil (2) auf die Stellmutter (3) aufkuppelbar ist (Fig. 4).

5. Nachstellvorrichtung nach Anspruch 2, mit einer die Gewindespindel (4) in Bremskraftrichtung belastenden Stellfeder, dadurch gekennzeichnet, daß das Gewinde (1) der Stellmutter (3) als Sägegewinde mit einer steilen und einer flachen Gewindeflanke ausgebildet ist, wobei bei Einleitung einer Bremskraft über das rohrartige Gestängeteil (2) und die Stellmutter (3) auf die Gewindespindel (4) nach Überwinden der Kraft der Stellfeder die flachen Gewindeflanken der Stellmutter (3) zur Anlage kommen, die ein selbsthemmendes Gewinde bilden, während bei Überwiegen der Kraft der Stellfeder die steilen Gewindeflanken der Stellmutter (3) zur Anlage kommen, die ein nicht selbsthemmendes Gewinde bilden.

6. Nachstellvorrichtung nach Anspruch 1, dadurch gekennzeichnet, daß die Stellmutter (3) ein nicht selbsthemmendes Gewinde (1') aufweist und in ihrem Umfang in mehrere Segmente unterteilt ist, und daß ein die Stellmutter (3) mit einer Konusfläche übergreifender Stellring (5) vorgesehen ist, der bei Einleitung einer Bremskraft über das rohrförmige Gestängeteil (2) die Stellmuttersegmente entgegen einer elastischen Rückstellkraft in die Gewindegänge drückt und hierbei das Gewinde (1') der Stellmutter (3) selbsthemmend schaltet, während bei fehlender Bremskraft die Stellmuttersegmente frei sind und das Gewinde (1') nicht selbsthemmend ist (Fig. 2).

7. Nachstellvorrichtung nach Anspruch 2, mit einer die Gewindespindel (4) in Bremskraftrichtung belastenden Stellfeder und einem die Stellmutter (3) drehbar abstützenden Stellager, dadurch gekennzeichnet, daß die ein nicht selbsthemmendes Gewinde (1') aufweisende Gewindespindel (4) zusätzlich eine Längsverzahnung aufweist und daß die Stellmutter (3) mit wenigstens einer gelenkig angeschlossenen Sperrklinke (5') versehen ist, die bei Bremskrafteinwirkung über das rohrförmige Gestängeteil (2) zur Sperrung der Drehmöglichkeit der Stellmutter (3) in die Längsverzahnung eingreift und bei durch die Stellfeder verursachter Krafteinwirkung über die Gewindespindel (4) durch Verschieben der Stellmutter (3) relativ zum rohrförmigen Gestängeteil (2) aus der Längsverzahnung aushebbar ist, wodurch die Stellmutter (3) bei Abstützen am Stellager unter der Kraft der Stellfeder frei drehbar ist (Fig. 3).

## Claims

1. Automatic adjusting device for brake rod linkages of rail vehicles in particular, having two linkage parts held at their outer ends so that they cannot be rotated and adjustable relative to one another telescopically by means of a screw coupling (1), of which one linkage part is constructed as a threaded spindle (4) and at least one linkage part (2) is constructed as a tube, one linkage part (4) being coupled with the brake parts and the other linkage part (2) being coupled with a braking force motor, for example a brake cylinder, from which a braking force originates, the screw coupling (1) comprising at least one adjusting nut (3) screwed on the threaded spindle (4) by means of a non-self-locking thread (1'), whilst an axially displaceable locking device is provided which in its locking position for transferring the braking force to the braking parts holds the adjusting nut (3) and/or the threaded spindle (4) so that it cannot rotate relative to the linkage parts and which in its open position for adjusting the brake rod linkages allows the adjusting nut (3) and the threaded spindle (4) to be screwed relative to one another, characterised in that in order that the outer ends of the two linkage parts (2, 4) are kept free from outwardly directed twisting moments in the region between these ends of the two linkage parts (2, 4) an element to stop rotation (5, 5', 6') is arranged which can be switched, is pressure locking or form locking and is effective between these linkage parts (2, 4).

2. Adjusting device according to Claim 1, characterised in that the rotation stop is arranged directly between the threaded spindle (4) and the adjusting nut (3) (Figs. 1, 3).

3. Adjusting device according to Claim 1, characterised in that the rotation stop is arranged directly between the two linkage parts (2 and threaded spindle 4) (Fig. 2).

4. Adjusting device according to Claim 1, characterised in that in the tubular linkage part (2) a locking ring (5) (sic) is axially fixed which is coupled, so that it can be displaced axially but not rotated, to the threaded spindle (4) and can be coupled onto the adjusting nut (3) by means of an axial toothing (7) given the introduction of a braking force via the tubular linkage part (2) (Fig. 4).

5. Adjusting device according to Claim 2, with an adjusting spring loading the threaded spindle (4) in the direction of the braking force, characterised in that the thread (1) of the adjusting nut (3) is constructed as a buttress thread with one steep and one gently sloping side, wherein, given the introduction of a braking force via the tubular linkage part (2) and the adjusting nut (3) to the threaded spindle (4), after overcoming the force of the adjusting spring, the gently sloping sides of the thread of the adjusting nut (3) come into abutment, forming a self-locking thread, while if the force of the adjusting spring predominates, the steep sides of the thread of the adjusting nut (3) come into abutment, forming a non-self-locking thread.

6. Adjusting device according to Claim 1, characterised in that the adjusting nut (3) has a non-self-locking thread (1') and is subdivided into several segments in its perimeter, and in that an adjusting ring (5) is provided which extends over the adjusting nut (3) via a conical surface, which adjusting ring, given the introduction of a braking force via the tubular linkage part (2), presses the segments of the adjusting nut against an elastic restoring force into the pitch of the thread and herewith switches the thread (1') of the adjusting nut (3) into a self-locking condition, whilst when there is no braking force the segments of the adjusting nut are free and the thread (1') is not self-locking (Fig. 2).

7. Adjusting device according to Claim 2, with an adjusting spring loading the threaded spindle (4) in the direction of the braking force and with an adjusting bearing supporting the adjusting nut (3) so that it can be rotated, characterised in that the threaded spindle, (4) which has a non-self-locking thread (1'), has in addition a longitudinal toothing and in that the adjusting nut (3) is provided with at least one pivotably attached stop pawl (5') which, when a braking force is applied via the tubular linkage part (2), engages with the longitudinal toothing for stopping the adjusting nut (3) from turning and which, when the force via the threaded spindle (4) caused by the adjusting spring is effective, can be withdrawn from the longitudinal toothing by movement of the adjusting nut (3) relative to the tubular linkage part (2), whereby the adjusting nut (3), when it rests on the adjusting bracket by means of the force of the adjusting spring, can be freely rotated (Fig. 3).

## Revendications

1. Dispositif de réglage pour la timonerie de frein, en particulier de véhicules sur rails, avec deux éléments de timonerie déplaçables relativement l'un par rapport à l'autre de façon télescopique à l'aide d'une liaison par vissage (1) et maintenus à leurs extrémités de manière à ne pas pouvoir tourner, éléments de timonerie dont l'un est réalisé à la manière d'une broche filetée (4) et au moins un élément de timonerie (2) est de forme tubulaire, du type dans lequel un élément de timonerie (4) est accouplé avec les organes de freinage et l'autre élément de timonerie (2) est accouplé avec un moteur de force de freinage fournissant une force de freinage, par exemple avec un cylindre de frein et la liaison par vissage (1) est constituée par au moins un écrou de réglage (3) vissé sur la broche filetée (4) à l'aide d'un filetage non-autobloquant (1'), alors qu'il est prévu un dispositif de blocage axialement déplaçable, qui, dans sa position de blocage, maintien, pour transmettre des forces de freinage aux organes de freinage, l'écrou de réglage (3) et/ou la broche filetée (4) en position de rotation fixe par rapport aux éléments de timonerie, et qui, dans sa position débloquée, autorise un vissage relatif entre l'écrou de réglage (3) et la broche filetée (4) en vue du rattrapage du jeu de la timonerie de frein, caractérisé par le fait que maintenir les extrémités des deux éléments de timonerie (2, 4) à l'abri de couples de rotation dirigés vers l'extérieur, il est prévu, dans la zone située entre ces extrémités des deux éléments de timonerie (2, 4), un élément de verrouillage anti-rotation (5, 5', 6') à transmission de force ou à complémentarité de forme, qui est commutable et qui est efficace entre ces éléments de timonerie (2, 4).

2. Dispositif de réglage selon la revendication 1, caractérisé par le fait que l'élément de verrouillage anti-rotation est disposé directement entre la broche filetée (4) et l'écrou de réglage (3) (Figures 1, 3).

3. Dispositif de réglage selon la revendication 1, caractérisé par le fait que l'élément de verrouillage anti-rotation est disposé directement entre les deux éléments de timonerie (2 et broche filetée 4) (Fig. 2).

4. Dispositif de réglage selon la revendication 1, caractérisé par le fait que dans l'élément de timonerie (2) de forme tubulaire est fixé axialement un anneau de verrouillage (5) qui est accouplé à la broche filetée (4) de manière à autoriser des déplacements axiaux mais à interdire toute rotation, et qui est susceptible d'être accouplé avec l'écrou de réglage (3), à l'aide d'une denture axiale (7) et par l'intermédiaire de l'élément de timonerie (2) de forme tubulaire, lors de l'initiation d'une force de freinage (Fig. 4).

5. Dispositif de réglage selon la revendication 2, comportant un ressort de réglage qui charge la broche filetée (4) dans le sens de la force de freinage, caractérisé par le fait que le filetage (1) de l'écrou de réglage (3) est réalisé sous la forme d'un filetage en dents de scie avec un flanc de filet raide et un flanc de filet plat, la réalisation étant telle que lors de l'initiation d'une force de freinage, par l'intermédiaire de l'élément de timonerie (2) de forme tubulaire (2) et de l'écrou de réglage (3) sur la broche filetée (4), et après que soit surmontée la force du ressort de réglage, les flancs de filet plats de l'écrou de réglage (3) viennent en contact en formant un filetage auto-bloquant, alors que si la force du ressort de réglage est prépondérante, les flancs de filet raides de l'écrou de réglage (3) viennent en contact, lesdits flancs raides formant un filetage non-auto-bloquant.

6. Dispositif de réglage selon la revendication 1, caractérisé par le fait que l'écrou de réglage (3) comporte un filetage non-autobloquant (1) et périphériquement il est subdivisé en plusieurs segments, qu'il est prévue une bague de réglage (5) qui est engagée par une surface conique l'écrou de réglage (3), laquelle bague refoule, lors de l'initiation d'une force de freinage, par l'intermédiaire de l'élément de timonerie (2) de forme tubulaire, les segments de l'écrou de réglage dans les pas de filet, à l'encontre d'une force de rappel élastique et commutant ainsi le filetage (1') de l'écrou de réglage (3) en position d'auto-blocage, alors qu'en l'absence de la force de freinage, les segments de l'écrou de réglage sont libres et le filetage (1') n'est pas auto-bloquant (Fig. 2).

7. Dispositif selon la revendication 2, comportant un ressort de réglage qui charge la broche filetée (4) dans le sens de la force de freinage et un palier de réglage soutenant en rotation l'écrou de réglage (3), caractérisé par le fait que la broche filetée (4), qui est pourvue d'un filetage non-autobloquant est munie, en plus, d'une denture longitudinale, et que l'écrou de réglage (2) est pourvu d'au moins un cliquet de verrouillage (5') articulé qui, sous l'effet d'une force de freinage, pénètre dans la denture longitudinale, par l'intermédiaire de l'élément de timonerie (2) de forme tubulaire, en vue de bloquer la possibilité de rotation de l'écrou de réglage (3), alors que sous l'effet de la force provenant du ressort de réglage, par l'intermédiaire de la broche filetée (4) et par déplacement de l'écrou de réglage (3) par rapport à l'élément de timonerie (2) de forme tubulaire, il est dégageable de la denture longitudinale, en sorte que l'écrou de réglage (3) est, en s'appliquant contre le palier de réglage, capable de tourner librement sous l'effet de la force du ressort de réglage (Fig. 3).

EP 0 205 927 B1

## Fig. 1

2

1

3

1'  4

## Fig. 2

5   2

1   3

1'  4

1

EP 0 205 927 B1

# Fig. 3

# Fig 4

2

# Fig. 3a

# Fig. 4a